# EUROPÄISCHE PATENTANMELDUNG

(11) **EP 4 661 120 A1**
(43) Veröffentlichungstag der Anmeldung: **10.12.2025**
(21) Anmeldenummer: 24179992.3
(22) Anmeldetag: 04.06.2024
(51) Int. Cl.: H01M 8/2404, H01M 8/248

(54) **MONTAGEVORRICHTUNG FÜR BRENNSTOFFZELLEN-STACKS**

(71) Anmelder: Carl Freudenberg KG, 69469 Weinheim (DE)
(72) Erfinder: Jakob, Thomas, 86316 Friedberg (DE); Liepert, Jürgen, 86447 Eisingersdorf (DE); Paukner, Matthias, 91757 Treuchtlingen (DE); Eberl, Martin, 86199 Augsburg (DE); Karmann, Christian, 86554 Pöttmes (DE)

(57) **Zusammenfassung**

Die Erfindung betrifft eine Montagevorrichtung zur Montage eines Brennstoffzellen-Stacks (2), umfassend einen ersten Arbeitsbereich (11), in welchem Stack-Bauteile (20) zu einem Stack in einer Stapelhilfe (4) gestapelt werden, einen zweiten Arbeitsbereich (12), in welchem im ersten Arbeitsbereich (11) zum Stack gestapelten Stack-Bauteile (20) mit einer Grundplatte (21) und einem Deckel (22) zu einem Brennstoffzellen-Stack (2) gepresst und fixiert werden, und einen Dreh-Hub-Tisch (3) mit einer Hubvorrichtung (30) und einer Drehachse (31), welche zwischen dem ersten Arbeitsbereich (11) und dem zweiten Arbeitsbereich (12) angeordnet ist und welcher für eine 180°-Drehung eingerichtet ist, um die gestapelten Stack-Bauteile (20) vom ersten Arbeitsbereich (11) zum zweiten Arbeitsbereich (12) zu fördern.

## Beschreibung

Die vorliegende Erfindung betrifft eine Montagevorrichtung zum Montieren eines Brennstoffzellen-Stacks, insbesondere mit großen Leistungen zur Verwendung bei Fahrzeugen, insbesondere Lastkraftwagen oder Bussen oder maritimen Anwendungen.

Brennstoffzellen-Stacks werden im Stand der Technik häufig noch manuell gestapelt, um einen Brennstoffzellen-Stapel herzustellen. Dies ist sehr zeitaufwendig und häufig auch für die beteiligten Werker sehr belastend, insbesondere bei der Herstellung von großen Brennstoffzellen-Stacks mit Leistungen bis zu 60 kW. Neben dem Vorgang des Stapelns verschiedener flächiger Stack-Bauteile wie Anode, Kathode, Dichtungen, Membranen, muss nach dem erfolgten Stapeln noch ein Pressvorgang und ein Fixieren des gepressten Brennstoffzellen-Stacks erfolgen. Hier ist aus der DE 10 2015 223 193 A1 eine Vorrichtung zum Pressen von Stack-Bauteilen bekannt.

Es ist daher Aufgabe der vorliegenden Erfindung, eine Montagevorrichtung für Brennstoffzellen-Stacks bereitzustellen, welche bei einfachem Aufbau und kostengünstiger Herstellbarkeit eine möglichst hohe Automatisierung der Montagevorgänge ermöglicht.

Diese Aufgabe wird durch eine Montagevorrichtung mit den Merkmalen des Anspruchs 1 gelöst. Die Unteransprüche zeigen bevorzugte Weiterbildungen der Erfindung.

Die erfindungsgemäße Montagevorrichtung für Brennstoffzellen-Stacks mit den Merkmalen des Anspruchs 1 weist den Vorteil auf, dass viele Schritte bei der Montage des Brennstoffzellen-Stacks automatisiert werden können. Hierdurch ist eine Entlastung von Werkern möglich. Ferner kann eine sehr schnelle Durchlaufzeit zur vollständigen Herstellung des Brennstoffzellen-Stacks erreicht werden.

Dies wird erfindungsgemäß dadurch erreicht, dass die Montagevorrichtung einen ersten und einen zweiten Arbeitsbereich aufweist. Dadurch kann an zwei Brennstoffzellen-Stacks gleichzeitig gearbeitet werden. Im ersten Arbeitsbereich werden die Stack-Bauteile zugeführt und in einer Stapelhilfe zu einem Stack gestapelt. Im zweiten Arbeitsbereich werden die im ersten Arbeitsbereich gestapelten Stack-Bauteile zusammen mit einer Grundplatte und einem Deckel zu einem Brennstoffzellen-Stack gepresst und fixiert. Der erste und zweite Arbeitsbereich sind dabei mittels eines Dreh-Hub-Tisches, welcher eine Hubvorrichtung und eine Drehvorrichtung mit Drehachse, insbesondere mit einer Zentrierfunktion für eine Stapelhilfe, aufweist, miteinander verbunden. Der Dreh-Hub-Tisch ist zwischen dem ersten und zweiten Arbeitsbereich angeordnet und ermöglicht eine 180°-Drehung. Dadurch können die im ersten Arbeitsbereich gestapelten Stack-Bauteile um 180° gedreht werden und zum zweiten Arbeitsbereich zugeführt werden, in welchem dann die Endmontage mit Pressen und Fixieren erfolgt. Gleichzeitig kann eine entleerte Stapelhilfe zurückgedreht werden und am ersten Arbeitsbereich wieder ein Stapelvorgang für einen nächsten Brennstoffzellen-Stack ausgeführt werden.

Die Stapelhilfe, in welcher die Stack-Bauteile gestapelt werden, umfasst vorzugsweise einen Stapelkäfig, welcher eine Käfigtür und einen Basiskäfig aufweist. Die Käfigtür ist vorzugsweise L-förmig und der Basiskäfig ist ebenfalls vorzugsweise L-förmig. Dadurch ist eine sehr gute Erreichbarkeit der Stapelstelle im Stapelkäfig gegeben. Die Käfigtür und der Basiskäfig sind mit Scharnieren miteinander befestigt, sodass die Käfigtür einfach geöffnet und geschlossen werden kann.

Vorzugsweise weist die Stapelhilfe Haltevorrichtungen zum Halten von Stangen, insbesondere Gewindestangen, für den Brennstoffzellen-Stack auf. Die Stangen sind vorzugsweise an der Außenseite des Brennstoffzellen-Stacks angeordnet und dienen zur endgültigen Fixierung des gestapelten und gepressten Brennstoffzellen-Stacks. Die Haltevorrichtungen umfassen vorzugsweise im Schnitt U-förmige Halteelemente, in welche die Stangen eingeclipst werden können und so am Stapelkäfig gehalten werden können. Dadurch können die Stangen nach dem Stapelvorgang einfach aus den Haltevorrichtungen ausgeclipst werden und am Brennstoffzellen-Stack fixiert werden.

Vorzugsweise weist die Stapelhilfe einen Käfigboden auf, welcher mittels der Hubvorrichtung des Dreh-Hub-Tisches anhebbar und absenkbar ist. Vorzugsweise weist der erste Arbeitsbereich einen ersten Roboter auf, welcher die Stack-Bauteile in der Stapelhilfe zu Stapeln stapelt. Dadurch kann dieser Vorgang automatisiert werden und eine verkürzte Durchlaufzeit erreicht werden. Vorzugsweise werden die Stack-Bauteile in einem gespannten Zustand, welcher vor einem Greifen mit dem ersten Roboter hergestellt wird, gestapelt. Weiter bevorzugt umfasst der zweite Arbeitsbereich eine Presse, um die gestapelten Stack-Bauteile in einem vorgegebenen Umfang zu pressen und anschließend zu fixieren.

Gemäß einer weiteren bevorzugten Ausgestaltung der Erfindung weist der zweite Arbeitsbereich einen Kranausleger auf, welcher eingerichtet ist, insbesondere durch einen Werker bedient zu werden und den gestapelten, gepressten und fixierten Brennstoffzellen-Stack aus dem zweiten Arbeitsbereich aus der Stapelhilfe zu entnehmen.

Vorzugsweise umfasst die Montagevorrichtung ferner eine Bereichsabtrennung zur Abtrennung des ersten Arbeitsbereichs vom zweiten Arbeitsbereich. Die Bereichsabtrennung ist vorzugsweise an einer Drehachse des Dreh-Hub-Tisches angeordnet und dreht sich bei einer Drehung mit. Die Bereichsabtrennung umfasst vorzugsweise zwei plattenförmige Abtrennungen, welche an der Drehachse um 180° einander gegenüberliegend angeordnet sind.

Vorzugsweise werden die Stack-Bauteile zum ersten Arbeitsbereich mittels einer ersten und einer zweiten Zufuhreinheit von zwei unterschiedlichen Seiten zum ersten Arbeitsbereich zugeführt. Dadurch kann die Durchlaufzeit für den Stapelvorgang halbiert werden.

Weiter bevorzugt umfasst die Montagevorrichtung eine erste und eine zweite Einschleuseinheit, wobei die erste Einschleuseinheit Stack-Bauteile zur ersten Zufuhreinheit zuführt und die zweite Einschleuseinheit Stack-Bauteile zur zweiten Zufuhreinheit zuführt. Vorzugsweise ist zwischen den Zufuhreinheiten und den Einschleuseinheiten jeweils ein Roboter angeordnet. Die Einschleuseinheiten dienen auch als Zwischenlagerung für Stack-Bauteile, welche vorzugsweise auf mehreren Zufuhrbändern zugeführt und zwischengelagert werden können.

Erfindungsgemäß können die Roboter beliebige Handling-Systeme sein, welche eine Handhabung der Bauteile ermöglichen.

Nachfolgend wird unter Bezugnahme auf die begleitende Zeichnung ein bevorzugtes Ausführungsbeispiel einer Montagevorrichtung im Detail beschrieben. In der Zeichnung ist:
Fig. 1 eine schematische, perspektivische Ansicht einer erfindungsgemäßen Montagevorrichtung,
Fig. 2 eine schematische Draufsicht der Montagevorrichtung von Fig. 1, und
Fig. 3 eine Detailansicht eines Dreh-Hub-Tisches der Montagevorrichtung von Fig. 1.

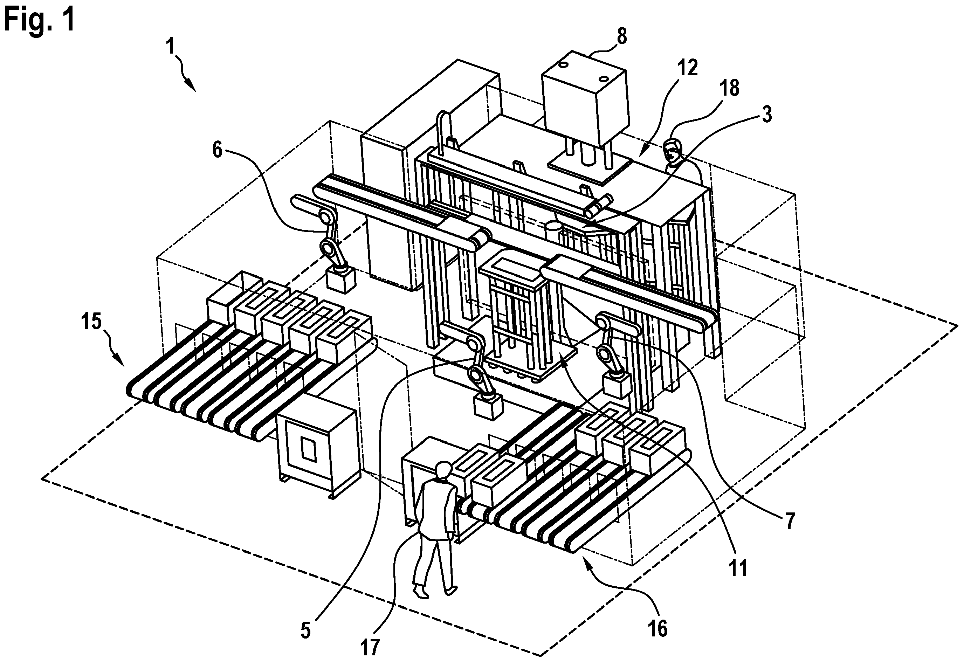

Nachfolgend wird unter Bezugnahme auf die Figuren 1 bis 3 eine Montagevorrichtung 1 zur Montage von Brennstoffzellen-Stacks 2 im Detail beschrieben.

Der Brennstoffzellen-Stack 2 weist eine Vielzahl von gestapelten Stack-Bauteilen 20, eine Grundplatte 21 und einen Deckel 22 auf. Die Grundplatte 21 und der Deckel 22 sind mittels einer Vielzahl von Gewindestangen 23 fixiert.

Die Gewindestangen können beispielsweise mittels Muttern fixiert werden oder ein Ende der Gewindestangen weist eine T-förmige Gestalt auf, welche in eine entsprechende Ausnehmung in der Grundplatte eingeführt werden kann, sodass die Gewindestangen am anderen Ende als Zugankerfixierung der gestapelten Stack-Bauteile 20 ermöglicht.

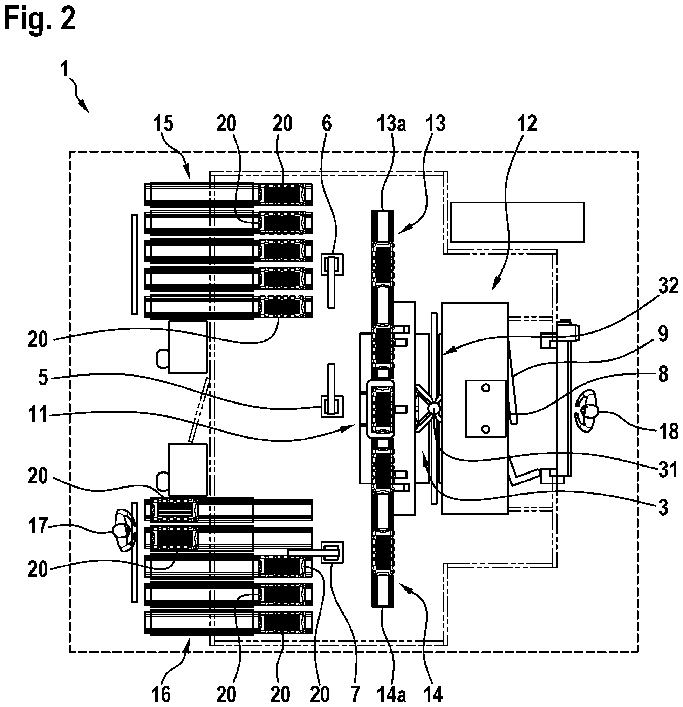

Wie insbesondere aus den Figuren 1 und 2 ersichtlich ist, umfasst die Montagevorrichtung 1 einen ersten Arbeitsbereich 11 und einen zweiten Arbeitsbereich 12.

Im ersten Arbeitsbereich 11 werden die Stack-Bauteile 20 zu einem Stack gestapelt. Hierbei wird eine Stapelhilfe 4 verwendet, welche in diesem Ausführungsbeispiel ein Stapelkäfig 40 ist.

Im zweiten Arbeitsbereich 12 werden die im ersten Arbeitsbereich 11 gestapelten Stack-Bauteile 20 zum endgültigen Brennstoffzellen-Stack 2 gepresst und fixiert. Dann kann der Brennstoffzellen-Stack 2 aus dem zweiten Arbeitsbereich 12 beispielsweise mittels eines Kranauslegers 9 oder dergleichen vom zweiten Arbeitsbereich 12 entnommen werden.

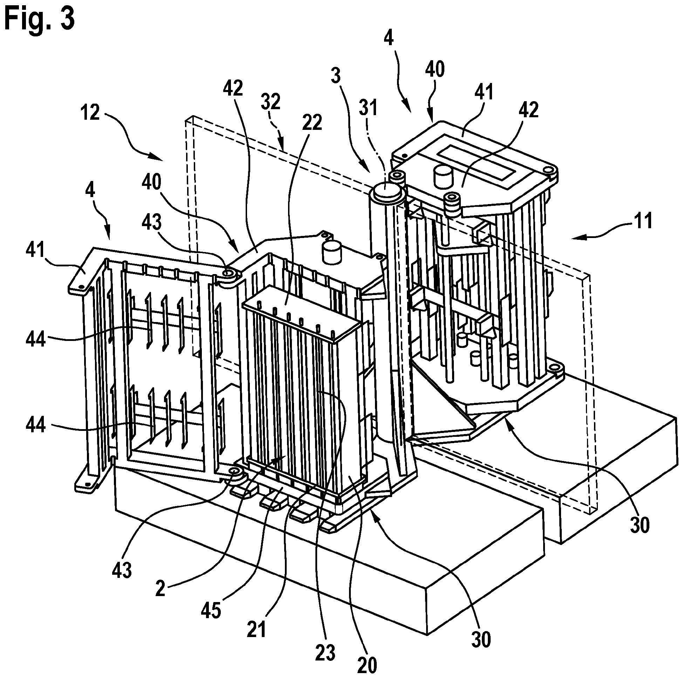

Zwischen dem ersten Arbeitsbereich 11 und dem zweiten Arbeitsbereich 12 ist ein Dreh-Hub-Tisch 3 angeordnet. Der Dreh-Hub-Tisch 3 hat die Aufgabe, die im ersten Arbeitsbereich 11 gestapelten Stack-Bauteile 20 in den zweiten Bereich 12 zu überführen. Dies erfolgt mittels einer 180°-Drehung, welche durch den Dreh-Hub-Tisch 3 um eine Drehachse 31 ausgeführt wird. Wie in Fig. 3 gezeigt, umfasst der Dreh-Hub-Tisch 3 eine Bereichsabtrennung 32 aus vorzugsweise durchsichtigen Paneelen, welche an der Drehachse 31 angeordnet sind und sich bei der 180°-Drehung mitdrehen. Gleichzeitig erfolgt ein Zurückdrehen einer entleerten Stapelhilfe 4 vom zweiten Arbeitsbereich 12 zum ersten Arbeitsbereich 11.

Wie weiter aus Fig. 2 ersichtlich ist, weist die Montagevorrichtung 1 ferner eine erste Einschleuseinheit 15 und eine zweite Einschleuseinheit 16 auf. Die beiden Einschleuseinheiten 15, 16 weisen mehrere Förderbänder (ohne Bezugszeichen) auf, auf welchen ein erster Werker 17 die verschiedenen Stack-Bauteile 20 auflegen kann. Dies ist schematisch in Fig. 2 angedeutet. Die beiden Einschleuseinheiten 15, 16 sind parallel zueinander angeordnet und ermöglichen eine parallele Einschleusung von Stack-Bauteilen.

Wie weiter aus Fig. 2 ersichtlich ist, weist die Montagevorrichtung 1 drei Roboter, nämlich einen ersten Roboter 5, einen zweiten Roboter 6 und einen dritten Roboter 7 auf.

Der erste Roboter 5 ist am ersten Arbeitsbereich 11 angeordnet und führt den Stapelvorgang der zugeführten Stack-Bauteile 20 aus. Wie in Fig. 2 gezeigt, werden die Stack-Bauteile 20 von zwei einander gegenüberliegenden Seiten über eine erste Zufuhreinheit 13 mit einem Förderband 13a und einer zweiten Zufuhreinheit 14 mit einem Förderband 14a zugeführt.

Die Stack-Bauteile 20 werden auf den Förderbändern 13a, 14a vorzugsweise vorgespannt, sodass die Stack-Bauteile 20 möglichst eben in einer Ebene liegen. Dadurch kann der Stapelvorgang sehr genau durchgeführt werden. Die Stack-Bauteile 20 werden nach dem Zuführen mit den Förderbändern 13a, 14a vom ersten Roboter 5 aufgenommen und in der richtigen Reihenfolge am ersten Arbeitsbereich 11 in die Stapelhilfe 4 gestapelt.

Wie weiter aus Fig. 2 ersichtlich ist, ist der zweite Roboter 6 zwischen der ersten Einschleuseinheit 15 und der ersten Zufuhreinheit 13 angeordnet. Der zweite Roboter 6 nimmt dabei Stack-Bauteile 20 von der ersten Einschleuseinheit 15 auf und legt diese auf das Förderband 13a der ersten Zufuhreinheit 13.

In gleicher Weise ist zwischen der zweiten Einschleuseinheit 16 und der zweiten Zufuhreinheit 14 der dritte Roboter 7 angeordnet. Somit kann eine Zufuhr von Stack-Bauteilen 20 von zwei einander gegenüberliegenden Seiten zum ersten Arbeitsbereich 11 ausgeführt werden. Der Stapelvorgang in der Stapelhilfe 4 kann somit mit doppelter Geschwindigkeit ausgeführt werden.

Am zweiten Arbeitsbereich 12 ist ferner noch eine Presse 8 vorgesehen. Die Presse 8 dient dazu, die im ersten Arbeitsbereich 11 gestapelten Stack-Bauteile 20 mit einer Grundplatte 21 und einem Deckel 22 mit einer vorbestimmten Kraft zusammenzupressen. Im zusammengepressten Zustand werden die Stack-Bauteile 20 dann mittels Gewindestangen 23 an der Grundplatte 21 und dem Deckel 22 fixiert.

Die Gewindestangen 23 können im Stapelkäfig 40 an Haltevorrichtungen 44 eingeclipst werden. Dies wird im ersten Arbeitsbereich 11 oder im zweiten Arbeitsbereich 12 ausgeführt, wobei die Haltevorrichtungen 44 im Schnitt U-förmige Halter sind, in die die Gewindestangen eingeclipst und ausgeclipst werden können. Die Gewindestangen können aus einem nicht gezeigten Lager jeweils vor dem Stapelvorgang im ersten Bereich 11 an der Stapelhilfe 4 angebracht werden.

Für eine noch weiter reduzierte Durchlaufzeit wird am zweiten Arbeitsbereich 12, nach der Entnahme des gepressten und fixierten Brennstoffzellen-Stacks 2 die Grundplatte 21 für den nächsten zu stapelnden Brennstoffzellen-Stack in den leeren Stapelkäfig 40 eingelegt. Bei diesem Vorgang könnten auch die Gewindestangen 23 in den Stapelkäfig 4 in die entsprechenden Haltevorrichtungen 44 eingeclipst werden und schon mit der Grundplatte 21, beispielsweise mit T-förmigen Enden der Gewindestangen in entsprechenden Nuten vorfixiert werden. Wenn dann der Dreh-Hub-Tisch 3 betätigt wird und die Stapelkäfige um 180° gedreht werden, ist am ersten Arbeitsbereich 11 schon die Grundplatte 21 und die Gewindestangen 23 vormontiert, sodass sofort mit dem Stapelvorgang begonnen werden kann. Gleichzeitig kann am zweiten Arbeitsbereich 12 nach Auflegen des Deckels 22 der Pressvorgang mittels der Presse 8 und die endgültige Fixierung der Gewindestangen 23 durch den zweiten Werker 18 ausgeführt werden.

Der Dreh-Hub-Tisch 3 weist eine Hubvorrichtung 30 mit Anheb- und Absenk-Möglichkeit auf, sodass während des Stapelvorgangs ein Stapelweg für den ersten Roboter 5 möglichst minimal ist. In gleicher Weise kann beim Einlegen der Grundplatte 21 am zweiten Arbeitsbereich 12 ein Käfigboden 45 angehoben werden, sodass der zweite Werker 18 die Grundplatte 21 auf einer angenehmen Arbeitshöhe einlegen kann. Der Dreh-Hub-Tisch 3 weist hierbei vorzugsweise eine Spindelanordnung zum Anheben und Absenken auf. Somit kann für den zweiten Werker ein ergonomischer Arbeitsplatz am zweiten Arbeitsbereich 12 ermöglicht werden und der Stapelvorgang am ersten Arbeitsbereich 11 in möglichst kurzer Zeit ausgeführt werden. Beispielsweise kann nach jedem Ablegen eines Stack-Bauteils 20 am ersten Arbeitsbereich 11 eine Absenkung entsprechend einer Höhe eines Stack-Bauteils 20 ausgeführt werden, sodass der Stapelvorgang für den ersten Roboter 5 immer auf der gleichen Höhe möglich ist.

Nachdem die Stack-Bauteile 20 vollständig am ersten Arbeitsbereich 11 in den Stapelkäfig 40 gestapelt wurden und die gestapelten Stack-Bauteile 20 um 180° gedreht wurden, legt der zweite Werker 18 noch den Deckel 22 auf, sodass dann mit dem Press- und Fixiervogang begonnen werden kann.

Die erfindungsgemäße Montagevorrichtung 1 ist dabei geeignet, Brennstoffzellen-Stacks mit unterschiedlichen Abmessungen sowohl in ihrer Höhe als auch hinsichtlich Länge und Breite herzustellen. Bei der Herstellung von Brennstoffzellen-Stacks mit unterschiedlichen Höhen kann durch den Dreh-Hub-Tisch jeweils die entsprechende Arbeitshöhe angepasst werden. Bei Stack-Bauteilen 20 mit unterschiedlichen Längen und Breiten wird der Stapelvorgang im Stapelkäfig 40 in einer Ecke ausgerichtet, sodass auch hier unterschiedliche Abmessungen sicher und schnell gestapelt werden können. Die beiden Einschleuseinheiten 15, 16 können selbstverständlich auch zum Ausschleußen von Trennelementen, z.B. Trennpapieren, welche an den einzelnen Stack-Bauteilen 20 angeordnet waren, verwendet werden.

Neben der vorstehenden schriftlichen Beschreibung der Erfindung wird zu deren ergänzender Offenbarung hiermit explizit auf die zeichnerische Darstellung der Erfindung in den Figuren Bezug genommen.

### Bezugszeichenliste

- 1: Montagevorrichtung
- 2: Brennstoffzellen-Stack
- 3: Dreh-Hub-Tisch
- 4: Stapelhilfe
- 5: erster Roboter
- 6: zweiter Roboter
- 7: dritter Roboter
- 8: Presse
- 9: Kranausleger
- 11: erster Arbeitsbereich
- 12: zweiter Arbeitsbereich
- 13: erste Zufuhreinheit
- 13a: Förderband
- 14: zweite Zufuhreinheit
- 14a: Förderband
- 15: erste Einschleuseinheit
- 16: zweite Einschleuseinheit
- 17: erster Werker
- 18: zweiter Werker
- 20: Stack-Bauteil
- 21: Grundplatte
- 22: Deckel
- 23: Gewindestange
- 30: Hubvorrichtung
- 31: Drehachse
- 32: Bereichsabtrennung
- 40: Stapelkäfig
- 41: Käfigtür
- 42: Basiskäfig
- 43: Scharnier
- 44: Haltevorrichtung für Gewindestange
- 45: Käfigboden

## Patentansprüche

1. Montagevorrichtung zur Montage eines Brennstoffzellen-Stacks (2), umfassend:
- einen ersten Arbeitsbereich (11), in welchem Stack-Bauteile (20) zu einem Stack in einer Stapelhilfe (4) gestapelt werden,
- einen zweiten Arbeitsbereich (12), in welchem im ersten Arbeitsbereich (11) zum Stack gestapelten Stack-Bauteile (20) mit einer Grundplatte (21) und einem Deckel (22) zu einem Brennstoffzellen-Stack (2) gepresst und fixiert werden, und
- einen Dreh-Hub-Tisch (3) mit einer Hubvorrichtung (30) und einer Drehachse (31), welche zwischen dem ersten Arbeitsbereich (11) und dem zweiten Arbeitsbereich (12) angeordnet ist und welcher für eine 180°-Drehung eingerichtet ist, um die gestapelten Stack-Bauteile (20) vom ersten Arbeitsbereich (11) zum zweiten Arbeitsbereich (12) zu fördern.

2. Montagevorrichtung nach Anspruch 1, wobei die Stapelhilfe (4) einen Stapelkäfig (40) umfasst, welcher eine Käfigtür (41) und einen Basiskäfig (42) aufweist, die mittels Scharnieren (43) miteinander verbunden sind.

3. Montagevorrichtung nach einem der vorhergehenden Ansprüche, wobei die Stapelhilfe (4) Haltevorrichtungen (44) für Stangen, insbesondere Gewindestangen, des Brennstoffzellen-Stacks (2) aufweist.

4. Montagevorrichtung nach einem der vorhergehenden Ansprüche, wobei die Stapelhilfe (4) einen Käfigboden (46) aufweist, welcher mittels der Hubvorrichtung (30) anhebbar und absenkbar ist.

5. Montagevorrichtung nach einem der vorhergehenden Ansprüche, wobei der erste Arbeitsbereich (11) einen ersten Roboter (5) umfasst, um Stack-Bauteile (20) in die Stapelhilfe (4) zu stapeln.

6. Montagevorrichtung nach einem der vorhergehenden Ansprüche, wobei der zweite Arbeitsbereich (12) eine Presse (8) umfasst, um die gestapelten Stack-Bauteile (20) mit einer vorbestimmten Kraft zusammenzupressen.

7. Montagevorrichtung nach einem der Ansprüche 3 bis 6, wobei die Haltevorrichtung (44) eine Clipshalterung aufweist, um die Stangen des Brennstoffzellen-Stacks (2) zu halten.

8. Montagevorrichtung nach einem der vorhergehenden Ansprüche, wobei der zweite Arbeitsbereich (12) einen Kranausleger umfasst, um den Brennstoffzellen-Stack (2) aus der Stapelhilfe (4) zu entnehmen.

9. Montagevorrichtung nach einem der vorhergehenden Ansprüche, ferner umfassend eine Bereichsabtrennung (32) zur Abtrennung des ersten Arbeitsbereichs (11) vom zweiten Arbeitsbereich (12), wobei die Bereichsabtrennung (32) an der Drehachse (31) des Dreh-Hub-Tisches (3) angeordnet ist und sich bei einer Drehung des Dreh-Hub-Tisches (3) mitdreht.

10. Montagevorrichtung nach einem der vorhergehenden Ansprüche, wobei die Stack-Bauteile (20) mittels einer ersten Zufuhreinheit (13) und einer zweiten Zufuhreinheit (14) zum ersten Arbeitsbereich (11) von zwei unterschiedlichen Seiten zugeführt werden.
